(19) **Europäisches Patentamt**

**European Patent Office**

**Office européen des brevets**

(11) **EP 1 044 237 B1**

(12) **FASCICULE DE BREVET EUROPEEN**

(45) Date de publication et mention
de la délivrance du brevet:
**04.08.2004 Bulletin 2004/32**

(51) Int Cl.⁷: **C08J 3/03**, C08L 83/04

(86) Numéro de dépôt international:
**PCT/FR1998/002858**

(21) Numéro de dépôt: **98963618.8**

(22) Date de dépôt: **23.12.1998**

(87) Numéro de publication internationale:
**WO 1999/035181 (15.07.1999 Gazette 1999/28)**

(54) **EMULSION SILICONE AQUEUSE, UTILE COMME BASE DE PREPARATION DE REVETEMENT HYDROFUGE ET ANTIADHERENT POUR PAPIER, PROCEDE DE PREPARATION D'UNE EMULSION DE CE TYPE ET DE REVETEMENTS ANTIADHERENTS**

WÄSSRIGE SILIKONEMULSION DIE ALS GRUNDLAGE ZUR HERSTELLUNG VON WASSERABWEISENDEN UND AUF PAPIER NICHTHAFTENDEN ÜBERZÜGEN VERWENDBAR IST, VERFAHREN ZUR HERSTELLUNG DIESER EMULSIONEN UND NICHTHAFTENDE ÜBERZÜGE

AQUEOUS SILICON EMULSION, USEFUL AS BASE FOR PREPARING A WATER RESISTANT AND ANTI-ADHERENT PAPER COATING, PREPARATION METHOD OF SUCH AN EMULSION AND ANTI-ADHERENT COATS

(84) Etats contractants désignés:
**BE DE FI FR GB IT LU NL SE**

(30) Priorité: **31.12.1997 FR 9716872**

(43) Date de publication de la demande:
**18.10.2000 Bulletin 2000/42**

(73) Titulaire: **RHODIA CHIMIE**
**92408 Courbevoie Cédex (FR)**

(72) Inventeurs:
• **DUFFY, Sean**
**Guildford, Surrey GU1 1TJ (GB)**

• **LIEVRE, André**
**F-69230 St-Genis Laval (FR)**
• **MIROU, Christian**
**F-69005 Lyon (FR)**

(74) Mandataire: **Trolliet, Maurice et al**
**RHODIA SERVICES**
**Direction de la Propriété Industrielle**
**CRIT-Carrières - BP 62**
**69192 Saint-Fons Cédex (FR)**

(56) Documents cités:
**EP-A- 0 253 747** **EP-A- 0 319 981**
**EP-A- 0 587 462** **US-A- 5 071 885**
**US-A- 5 095 067**

**Description**

Le domaine de l'invention est celui des compositions silicones réticulables ou réticulées, susceptibles d'être utilisées, notamment, pour former un revêtement ou film hydrofuge et antiadhérent pour support fibreux ou non, par exemple en papier ou analogue, ou bien encore en polymère naturel ou synthétique.

Plus précisément, l'invention se rapporte aux dispersions ou émulsions silicones aqueuses du type de celle comprenant :

· des polyorganosiloxanes (POS) porteurs, sur une même molécule au moins, de motifs SiH et SilE avec IE représentant un groupement comportant au moins une insaturation éthylénique, de préférence vinylique ;
· un catalyseur - C - métallique de préférence platinique,
· des radicaux hydroxyles susceptibles de réagir avec des motifs SiH par déshydrogénocondensation.

L'invention concerne également la préparation de ce type d'émulsions silicones aqueuses.

Sont également visés par les présentes, les procédés de fabrication d'articles en silicone réticulé, notamment des revêtements e.g. hydrofuges et/ou antiadhérents pour supports fibreux ou non (papier), à partir de l'émulsion susvisée.

Les polyorganosiloxanes sont connus pour leur aptitude à rendre antiadhérentes des surfaces de supports divers, (e.g. papier, tissu, film polymère ou autres). Les traitements antiadhérents sont faciles à effectuer avec les silicones, car ces derniers peuvent se présenter sous forme de polymère, solution ou émulsion liquide réticulable, qui sont facilement applicables et étalables sur des supports, à cadence et à échelle industrielle. C'est ainsi que les compositions silicones sont, par exemple, utilisées comme agent de démoulage, notamment dans la confection des pneus et dans l'injection de matières plastiques, ou bien encore pour le revêtement des moules métalliques utilisés en pâtisserie ou des filets dans les fours à pain ou enfin pour la réalisation de papier protecteur d'adhésifs (étiquette, papier décoratif), de papier intercalaire pour la manipulation des masses collantes (stratifié, caoutchouc cru), de papier antiadhérent pour la cuisson des pâtisseries. A titre illustratif, on peut indiquer que les demandes ou brevets US-A-4 347 346, EP-A-0 219 720, EP-A-0 454 130 et EP-A-0 523 660 décrivent des polyorganosiloxanes, destinés à être utilisés dans l'application antiadhérence papier.

Les compositions silicones selon l'art antérieur visé ci-dessus sont employées dans ce domaine de l'antiadhérence papier, sous forme de bains d'émulsion (ou bains d'enduction) qui servent à enduire les supports de films, qui sont ensuite reticulés sous activation thermique pour former le revêtement hydrofuge et anti-adhérent.

Les systèmes d'émulsions silicones aqueuses auxquels on s'intéresse plus particulièrement dans le cadre du présent exposé sont ceux contenant des polyorganosiloxanes (POS) à motifs SiH et les POS à motifs Si-vinyle. Classiquement, ces systèmes polymérisent par catalyse au platine, selon un mécanisme de polyaddition (également dénommée hydrosilylation) SiH/SiVi.

Hormis les POS SiH et les POS SiVi et le catalyseur au platine, ces émulsions contiennent une ou plusieurs espèces hydrosolubles comme l'hydroxyéthylcellulose, l'amidon, l'alcool polyvinylique... ayant notamment un rôle d'émulsifiant, d'épaississant et stabilisant, mais également le rôle de promouvoir deux effets antinomiques à savoir : l'antiadhérence et l'imprimabilité.

La stabilité de ces émulsions silicones contenant les espèces réactives SiH et SiVi ainsi que le catalyseur - **C** - au platine, peut également être conditionnée par la présence d'un inhibiteur de la réaction de polyaddition.

Par nature, ces émulsions contiennent des tensioactifs.

Eilles peuvent être également additionnées de divers additifs e.g. :

- polymères synthétiques en émulsion (latex) utiles notamment pour modifier le comportement rhéologique du bain,
- antigels,
- mouillants,
- bactéricides,
- acidifiants,
- antimousses...

Selon un axiome communément admis dans l'état de la technique, ces bains d'émulsions silicones aqueuses doivent être acides, c'est-à-dire avoir un pH inférieur à 5.

Or, il se trouve que de tels bains d'émulsions silicones sont sujets à une certaine instabilité chimique, qui se traduit par la production de gels et de mousses (chimiques) indésirables. On conçoit en effet aisément que ces gels et ces mousses posent de réelles difficultés lors de leur utilisation sur les machines industrielles d'enduction. De surcroît, cela nuit gravement à la qualité de l'enduction et donc aux performances finales du support (e.g. papier) siliconé au moyen de ces bains d'émulsion instables.

On pense que ces mousses indésirables résultent de réactions parasites, qui sont des déshydrogénocondensation (DHC) entre les groupements SiH des POS contenus dans le bain et des groupements hydroxyles qui sont apportés par l'eau, par des émulsifiants, des épaississants, des stabilisants ou autres promoteurs d'antiadhérence tels que les alcools polyvinyliques, par les inhibiteurs de réticulation comme par exemple l'éthynylcyclohexanol (ECH) ou bien encore par les additifs mouillants et/ou antigels tels que le propylène glycol, entre autres. Ces DHC entraînent la formation d'hydrogène gazeux, lui-même à l'origine du foisonnement indésirable.

La formation de gel provient quant à elle plus notamment de réactions prématurées d'addition entre des motifs SiVi et des motifs SiH, qui conduisent au pontage d'atomes de silicium, d'où l'augmentation de la viscosité, qui se révèle au travers des gels. En effet, la consommation de l'inhibiteur de la polyaddition (e.g. éthynylcyclohexanol) par les groupements hydroxyles déstabilise également le bain, car la réaction de polyaddition s'initie dans le bain alors qu'elle ne devrait avoir lieu que sur le support après chauffage. Il se produit donc une gélification qui nuit à la qualité de l'étalement de l'émulsion sur le support. Ceci a pour effet de diminuer les performances antiadhérentes du support siliconé. Il est à noter que la condensation de motifs Si-OH entre eux pour former des pontages Si-Si, peut elle aussi concourir à la gélification. Ces motifs SiOH proviennent de la réaction des SiH avec les groupements OH présents dans le milieu.

On comprend qu'outre le fait que ces mousses et ces gels soient rédhibitoires à l'utilisation, ils soustendent la consommation de groupements SiH, qui ne seront, par suite, plus disponibles pour la réaction de polyaddition conduisant à la réticulation souhaitée en couche mince, comme par exemple sous forme de revêtement. Cela induit donc directement une perte de réactivité de l'émulsion.

Les bains d'émulsions silicones aqueuses de l'état de la technique souffrent par ailleurs d'un autre inconvénient majeur qui est une instabilité physique se cumulant à l'instabilité chimique évoquée ci-dessus. En effet, dès lors que l'émulsion est soumise à un cisaillement (agitation), ce qui est notamment le cas lorsque l'émulsion circule dans les machines industrielles d'enduction et en particulier lorsqu'elles se trouvent au niveau des têtes d'enduction de machines industrielles, on assiste à un phénomène de coalescence des gouttelettes. Cela a pour conséquence une gélification, d'où une perte de réactivité et une moindre qualité du revêtement notamment au regard de l'anti-adhérence. Ce phénomène est aggravé par le fait que la température de l'émulsion peut augmenter au fur et à mesure de sa circulation dans les machines industrielles d'enduction. Cette gélification et cette perte de réactivité liées à la contrainte de cisaillement, découlent, elles aussi, de la consommation parasite des SiH par réaction avec les OH présents.

Dans ces circonstances, il était fortement présumé dans l'état de la technique que le pH de conservation le moins nocif pour ces émulsions silicones est un pH inférieur à 5, car on admettait unanimement que les déshydrogénocondensations sont inhibées à pH acide.

La demanderesse ne s'est pas résolue à accepter ce pis-aller en matière de stabilité chimique et physique de bains d'émulsions silicones aqueuses contenant des POS SiH, des POS SiVi et des pourvoyeurs d'OH, favorisant les DHC parasites et par la suite la formation de mousses et de gels indésirables.

La demanderesse s'est donc fixée pour objectif essentiel de fournir des émulsions silicones aqueuses du type de celles évoquées ci-dessus, mais qui, contrairement à ces dernières, soient stables et qui ne donnent pas lieu aux phénomènes indésirables connus de formation de mousses chimiques, de gels et de coalescence.

Un autre objectif essentiel de la présente invention est de fournir des émulsions silicones aqueuses, comprenant des POS à motifs SiH et des POS à motifs SiVi, et des pourvoyeurs d'OH, et qui soient pourtant stables sans sacrifier aux impératifs d'économie et de facilité de préparation.

Un autre objectif essentiel de la présente invention est de fournir des émulsions silicones aqueuses, du type de celles visées ci-dessus et utiles notamment pour la réalisation de revêtements anti-adhérents pour support fibreux ou non (e.g. papier), qui conduisent après réticulation par polyaddition SiH/SiVi à des films polymères anti-adhérents et hydrofuges qui soient correctement fixés sur leurs supports et qui présentent des qualités optimales en matière d'antiadhérence, d'hydrofugation, d'imprimabilité et de caractéristiques mécaniques (dureté).

Un autre objectif essentiel de la présente invention est de fournir un procédé de préparation d'émulsions silicones aqueuses, notamment du type de celles évoquées ci-dessus, ledit procédé se devant d'apporter une solution simple, économique et performante aux problèmes d'instabilité à l'origine du foisonnement et de la gélification indésirables.

Un autre objectif essentiel de la présente invention est de fournir un procédé d'obtention d'objets en silicone polymérisé/réticulé, obtenus à partir d'émulsions silicones aqueuses, du type de celles mentionnées supra, ces objets pouvant en particulier être des revêtements anti-adhérents pour support par exemple en papier, les objets obtenus par ledit procédé se devant des présenter des propriétés mécaniques optimales et en particulier dans le cas des revêtements anti-adhérents des propriétés d'antiadhérence et d'hydrofugation les plus convenables possibles.

Pour parvenir à atteindre ces objectifs, les inventeurs ont dû faire preuve d'un haut mérite inventif, puisqu'il leur a fallu aller à l'encontre du préjugé technique solidement ancré dans les moeurs, selon lequel le pH acide est le seul qui puisse convenir au regard de la stabilisation des émulsions silicones aqueuses considérées.

C'est ainsi qu'ils ont mis en évidence de manière tout à fait surprenante et inattendue que la résolution du problème technique à la base de l'invention, passait par la fixation et le maintien du pH de l'émulsion dans une gamme de pH égaux ou supérieurs à 5 et judicieusement circonscrite à l'intervalle 6-8. En fait, les inventeurs se sont aperçus que le préjugé de stabilité à pH acide, ne valait qu'en l'absence de platine et que l'on ne pouvait pas le transposer dans le cas où l'on est en présence de platine.

D'où il s'ensuit que la présente invention concerne en premier lieu une émulsion silicone aqueuse utilisable notamment comme base d'enduction pour la réalisation de revêtements hydrofuges et antiadhérents, cette émulsion étant du type de celle comprenant :

· au moins un polyorganosiloxane - **A** - (POS) porteur de motifs Si-IE avec IE représentant un groupement comportant au moins une insaturation éthylénique, de préférence vinylique, et au moins un POS - **B** - porteur de motifs SiH ; ces derniers étant aptes à réagir par polyaddition avec les motifs SilE,
· un catalyseur - **C** - métallique, de préférence platinique,
· des radicaux hydroxyles susceptibles de réagir avec des motifs SiH par déshydrogéuocondensation,

caractérisée en ce qu'elle comprend en outre au moins un agent -**T**- de fixation et de maintien du pH entre 6 et 8, cet agent étant, avantageusement, un système tampon.

Il est à noter que l'homme du métier était d'autant moins enclin à adopter la solution préconisée par l'invention, qui procède d'une alcalinisation de l'émulsion comprenant un catalyseur métallique (de préférence platinique), car il était bien connu que les groupements SiH sont très instables en présence de groupements hydroxyles dans des milieux de pH $\geq$ 5. Les inventeurs ont montré, qu'en réalité, cela n'est vrai qu'en l'absence de platine.

Cela ne fait que renforcer le caractère imprévisible de l'effet entraîné par la disposition conforme à l'invention d'utiliser un moyen de contrôle du pH dans une fourchette donnée, pour limiter les réactions parasites décrites ci-dessus, sans pour autant détruire les groupements SiH.

Le moyen de l'invention est, de préférence, un système tampon qu'il convient de choisir de manière appropriée selon la constitution et le pH de l'émulsion silicone aqueuse considérée.

L'amélioration de la stabilité de l'émulsion obtenue grâce à l'invention se traduit directement par une chute significative, du foisonnement et de la gélification.

L'invention permet de réduire les quantités de catalyseur **C** employées, du fait de la stabilisation du taux de SiH à laquelle elle conduit. Il n'est donc plus nécessaire de doper le milieu en catalyseur **C**.

Selon une caractéristique préférée de l'invention la phase silicone dispersée non aqueuse de l'émulsion, présente la composition qualitative suivante :

- **A** - au moins un POS porteur, par molécule, d'au moins deux motifs Si-IE;
- **B** - au moins un POS porteur, par molécule, d'au moins deux de préférence d'au moins trois motifs Si-H ;
- **C** - un catalyseur métallique, de préférence platinique ;
- **T** - l'ou les agents de fixation et de maintien du pH ;
- **D** - au moins un agent d'émulsification, de préférence choisi parmi les tensioactifs et/ou les colloïdes protecteurs, et plus préférentiellement encore parmi les alcools polyvinyliques (APV) ;
- **E** - éventuellement au moins un stabilisant de la réaction de polyaddition ;
- **F** - éventuellement un ou plusieurs additifs.

Si l'on s'intéresse à des caractéristiques quantitatives préférées de l'émulsion selon l'invention, il convient également de signaler que la phase silicone dispersée de cette émulsion, possède la composition quantative suivante (en poids sec par rapport à la masse totale des POS A et B) :

- **C** - 30 à 200, de préférence 50 à 150, et plus préférentiellement 80 à 120 ppm ;
- **D** - 0,01 à 10, de préférence 0,05 à 5 parties pour 100 parties ;
- **E** - 0 à 5000, de préférence 500 à 2000 ppm,
- **F** - 0 à 10, de préférence 0 à 5 ppm.

$\rightarrow$ **A** et **B** étant présents en quantités telles que le ratio molaire SiH / SiVi soit compris entre 1 et 5, de préférence entre 1 et 3, et plus préférentiellement entre 1,5 et 2 ;
$\rightarrow$ **T** étant présent en quantité suffisante pour maintenir le pH dans la fenêtre visée.

Les émulsions selon l'invention permettent d'obtenir, après enduction et réticulation, des surfaces antiadhérentes et hydrofuges. De plus, les revêtements réticulés ainsi réalisés sont relativement insensibles à la température. Ils bénéficient, en outre, de bonnes propriétés mécaniques (e.g. dureté).

On aura compris que ce sont les produits à base de silicone qui constituent l'essentiel de la phase dispersée des émulsions aqueuses considérées dans le présent exposé.

Les gouttelettes de phase silicone qui forment cette phase dispersée, peuvent répondre à plusieurs variantes de composition, selon le nombre et la nature des produits silicones qu'elles contiennent.

Selon un mode de réalisation préférée de l'invention, l'émulsion comprend au moins trois familles différentes de gouttelettes de phase silicone dispersée :

* $g_1$ * essentiellement constituée de POS **A** et exempte de catalyseur **C**
* $g_2$ * essentiellement constituée de POS **B** et exempte de catalyseur **C**
* $g_3$ * comprenant le catalyseur **C** ;

les gouttelettes d'au moins l'une de ces familles comportant au moins un stabilisant **E**.

Le stabilisant **E** est là en tant qu'inhibiteur de la polyaddition Si-H/Si-IE (avec IE = Vi, par exemple), pour permettre à l'émulsion de pouvoir être stockée dans des conditions atmosphériques normales, sous forme de système monocomposant prêt à l'utilisation. **E** est rajouté soit dans l'un des composants précurseurs du système monocomposant soit directement dans ce dernier.

Le stabilisant **E** est avantageusement présent dans les mêmes gouttelettes que celles qui contiennent le POS **A** à motifs Si-IE, de préférence Si-vinyle.

L'agent **T** de fixation et de maintien du pH est, de préférence, un système tampon comprenant $HCO_3^-/CO_3^{2-}$ et/ou $H_2PO_4^-/HPO^{2-}_4$. Ainsi, pour obtenir l'effet tampon souhaité, il conviendra d'introduire conformément à l'invention un sel d'$HCO_3^-$ et/ou $H_2PO_4^-$ comme par exemple $NaHCO_3$ et/ou $Na_2CO_3$ et/ou $NaH_2PO_4$ et/ou $Na_2HPO_4$. Il va de soi que tout autre sel à contre-anion différent (e.g. K) pourrait convenir. De manière particulièrement préférée, on met en oeuvre en pratique un système tampon constitué par du $NaHCO_3$ que l'on incorpore dans l'émulsion.

Selon une variante, le système tampon peut être un moyen permettant d'assurer une régulation du pH de l'émulsion en suivant l'évolution de son pH et en corrigeant ses variations par incorporation dans l'émulsion de quantités adaptées d'au moins un agent **-T-**, qui peut être un acide ou une base selon le sens de variation du pH.

L'acide ou la base rajouté à l'émulsion selon les besoins, à titre d'agent **-T-**, pour la régulation exogène du pH, peut-être minéral ou organique. Il peut également s'agir d'un sel d'acide fort (ou faible) ou de base forte (ou faible). A titre d'exemples de bases fortes, on peut citer : la triéthanolamine, la soude ou la potasse.

S'agissant des POS, de préférence **A** et **B**, mis en oeuvre dans l'émulsion selon l'invention, il convient de noter que le POS **A** est pondéralement l'un des constituants essentiel de l'émulsion.

Avantageusement, ce POS **A** est un produit comprenant des motifs de formule :

$$W_a Z_b SiO_{\frac{4-(a+b)}{2}} \qquad \text{(A.1)}$$

dans laquelle :

- W est un groupe alcényle, de préférence vinyle ou allyle,
- Z est un groupe hydrocarboné monovalent, exempt d'action défavorable sur l'activité du catalyseur et choisi, de préférence, parmi les groupes alkyles ayant de 1 à 8 atomes de carbone inclus, avantageusement, parmi les groupes méthyle, éthyle, propyle et 3,3,3-trifluoropropyle et ainsi que parmi les groupes aryles et, avantageusement, parmi les radicaux xylyle et totyle et phényle,
- a est 1 ou 2, b est 0, 1 ou 2 et a + b est compris entre 1 et 3,

éventuellement au moins une partie des autres motifs sont des motifs de formule moyenne :

$$Z_c SiO_{\frac{4-(c)}{2}} \qquad \text{(A.2)}$$

dans laquelle Z a la même signification que ci-dessus et c a une valeur comprise entre 0 et 3, par exemple entre 1 et 3.

Z est généralement choisi parmi les radicaux méthyle, éthyle et phényle, 60 % molaire au moins des radicaux Z étant des radicaux méthyle.

Il est avantageux que ce polydiorganosiloxane ait une viscosité (à 25° C) au moins égale à 10 mPa·s, de préférence à 1000 mPa.s et plus préférentiellement encore comprise entre 5.000 et 200.000 mPa.s.

Toutes les viscosités dont il est question dans le présent exposé correspondent à une grandeur de viscosité dynamique à 25° C dite "Newtonienne ", c'est-à-dire la viscosité dynamique qui est mesurée, de manière connue en soi, à un gradient de vitesse de cisaillement suffisamment faible pour que la viscosité mesurée soit indépendante du gradient de vitesse.

Le polyorganosiloxane **A** peut être uniquement formé de motifs de formule (**A.1**) ou peut contenir, en outre, des motifs de formule (**A.2**). De même, il peut présenter une structure linéaire ramifiée cyclique ou en réseau. Son degré de polymérisation est, de préférence, compris entre 2 et 5 000.

Des exemples de motifs siloxyle de formule (**A.1**) sont le motif vinyldiméthylsiloxane, le motif vinylphénylméthylsiloxane et le motif vinylsiloxane.

Des exemples de motifs siloxyle de formule (**A.2**) sont les motifs $SiO_{4/2}$, diméthylsiloxane, méthylphénylsiloxane, diphénylsiloxane, méthylsiloxane et phénylsiloxane.

Des exemples de polyorganosiloxanes **A** sont les diméthylpolysiloxanes à extrémités diméthylvinylsilyle, les copolymères méthylvinyldiméthylpolysiloxanes à extrémités triméthylsilyle, les copolymères méthylvinyldiméthylpolysiloxanes à extrémités diméthylvinylsilyle, les méthylvinylpolysiloxanes cycliques

Le polyorganosiloxane **B** est de préférence du type de ceux comportant des motifs siloxyle de formule :

$$H_d L_e SiO_{\frac{4-(d+e)}{2}} \qquad (B.1)$$

dans laquelle :

-    L est un groupe hydrocarboné monovalent, exempt d'action défavorable sur l'activité du catalyseur et choisi, de préférence, parmi les groupes alkyles ayant de 1 à 8 atomes de carbone inclus et, avantageusement, parmi les groupes méthyle, éthyle, propyle et 3,3,3-trifluoropropyle et ainsi que parmi les groupes aryles et, avantageusement, parmi les radicaux xylyle et totyle et phényle,
-    d est 1 ou 2, e est 0, 1 ou 2, d + e a une valeur comprise entre 1 et 3,
-    éventuellement, au moins une partie des autres motifs étant des motifs de formule moyenne :

$$L_g SiO_{\frac{4-g}{2}} \qquad (B.2)$$

dans laquelle L a la même signification que ci-dessus et g a une valeur comprise entre 0 et 3.

La viscosité dynamique $h_d$ (à 25° C) de ce polyorganosiloxane **B** $\geq$ à 5 de préférence à 10 et, plus préférentiellement encore, est comprise entre 20 et 1000 mPa.s.

Le polyorganosiloxane **B** peut être uniquement formé de motifs de formule (B.1) ou comporte en plus des motifs de fomule (**B.2**).

Le polyorganosiloxane **B** peut présenter une structure linéaire ramifiée cyclique ou en réseau. Le degré de polymérisation est supérieur ou égal à 2. Plus généralement, il est inférieur à 5 000.

Des exemples de motifs de formule (**B.1**) sont :

$$H(CH_3)_2 SiO_{1/2}, \qquad HCH_3 SiO_{2/2}, \qquad H(C_6 H_5)SiO_{2/2}$$

Les exemples de motifs de formule (**B.2**) sont les mêmes que ceux donnés plus haut pour les motifs de formule (**A.2**).

Des exemples de polyorganosiloxane B sont :

-    les diméthylpolysiloxanes à extrémités hydrogénodiméthylsilyle, poly(diméthylsiloxane) (méthylhydrogénosiloxy) $\alpha,\omega$-diméthylhydrogénosiloxane.
-    les copolymères à motifs diméthyl-hydrogénométhylpolysiloxanes (diméthyl) à extrémités triméthylsilyle,
-    les copolymères à motifs diméthyl-hydrogénométhylpolysiloxanes à extrémités hydrogénodiméthylsilyle,
-    les hydrogénométhylpolysiloxanes à extrémités triméthylsilyle,
-    les hydrogénométhylpolysiloxanes cycliques.

Les bases de compositions silicones polyaddition peuvent ne comporter que des polyorganosiloxanes **A** et **B** linéaires comme, par exemple, celles décrites dans les brevets : US-A-3 220 972, US-A-3 697 473 et US-A-4 340 709 ou comporter à la fois des polyorganosiloxanes **A** et **B** ramifiés ou en réseau, comme par exemple celles décrites dans les brevets : US-A-3 284 406 et US-A-3 434 366.

Les catalyseurs C sont également bien connus. On utilise, de préférence, les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur généralement préféré est le platine. Dans ce cas, la quantité pondérale de catalyseur **C**, calculée en poids de platine-métal, est généralement comprise entre 2 et 400 ppm, de préférence entre 5 et 200 ppm basée sur le poids total des polyorganosiloxanes **A** et **B**.

Le ou les tensioactifs présents dans l'émulsion suivant l'invention à titre d'agent d'émulsification - D -, sont de nature non-ionique ou ionique.

En pratique, on peut utiliser comme non ioniques des alkyles phénols, des alcools gras ou des acides gras porteurs de groupements oxyde d'alkylène par exemple éthylène ou propylène e.g. : nonylphénol comprenant entre 9 et 30 groupements oxyde d'éthylène (OE) ou acide oléique avec 2 à 8 OE.

Les tensioactifs ioniques de préférence anioniques qui peuvent être mis en oeuvre sont, e.g. des sulfates, sulfonates, phosphates, sulfosuccinates, sulfosuccinamates, sulfoacétates, ou des dérivés d'acides aminés.

Pour plus de détails sur les tensioactifs disponibles, on se référera aux ouvrages de référence, et par exemple à l'article paru dans " Informations Chimie n° 146 - Juin-Juillet 1975 - p. 119-126 ".

S'agissant des agents - D - d'émulsification hydrosolubles du type colloïde protecteur, il convient d'observer, qu'outre leur fonction émulsifiante, ces colloïdes protecteurs tels que les APV peuvent également être actifs à titre de promoteurs de l'antiadhérence, de l'hydrofugation, voire de l'imprimabilité, pour ce qui concerne le domaine de l'anti-adhérence papier.

Les alcools polyvinyliques (APV) sont des composés obtenus indirectement à partir de leurs esters, par hydrolyse en milieu aqueux ou par alcoolyse en milieu anhydre. En pratique, les esters utilisés comme matière première sont couramment les acétates de polyvinyles. Généralement, la lyse des esters conduisant aux APV n'est pas complète. Il reste dans la molécule des radicaux acyles dont la proportion influe sur les propriétés de l'APV, notamment sur sa solubilité. Un mode de définition des APV repose donc sur l'indication de l'indice d'ester (I.E) qui est inversement proportionnel au taux d'hydrolyse. La mesure de l'I.E. s'effectue de manière connue en soi, par neutralisation de l'acidité éventuelle de l'alcool polyvinylique, saponification des groupes acyles et titrage de l'excès d'alcaline saponification.

Les alcools polyvinyliques sont également caractérisés par leur degré de condensation que l'on peut évaluer par la détermination de la viscosité dynamique d'une solution type (désignée par $h_{dt}$ dans le présent exposé), sachant que cette variable est d'autant plus élevée que le degré de condensation est plus grand. La viscosité $h_{dt}$ correspond au coefficient de viscosité dynamique d'une solution aqueuse d'APV à 4 % poids, mesuré à une température de $20 \pm 5°C$ à l'aide d'un viscosimètre d'Ostwald.

Sans que cela ne soit limitatif, on peut donner des exemples d'alcools polyvinyliques procurant des résultats satisfaisants au regard des objectifs visés par l'invention : ces APV sont ceux dont l'$h_{dt}$ est compris entre 5 et 10 mPa. s et dont l'I.E. est compris entre 130 et 150.

Les acétates de polyvinyle sont des APV classiques, utilisables pour l'invention.

Avantageusement, le système catalytique de cette émulsion élastomère silicone de type polyaddition, comprend au moins un stabilisant E ou ralentisseur de la réaction d'addition (inhibiteur de réticulation), choisi parmi les composés suivants :

- polyorganosiloxanes, avantageusement cycliques et substitués par au moins un alcényle, le tétraméthylvinyltétrasiloxane étant particulièrement préféré,
- la pyridine,
- les phosphines et les phosphites organiques,
- les amides insaturés,
- les maléates alkylés
- et les alcools acétyléniques.

Ces alcools acétyléniques, (Cf. **FR-B-1 528 464** et **FR-A-2 372 874**), qui font partie des bloqueurs thermiques de réaction d'hydrosilylation préférés, ont pour formule :

$$R - (R') \, C \, (OH) - C \equiv CH$$

formule dans laquelle,

. R est un radical alkyle linéaire ou ramifié, ou un radical phényle ;
. R' est H ou un radical alkyle linéaire ou ramifié, ou un radical phényle ;

. les radicaux R, R' et l'atome de carbone situé en a de la triple liaison pouvant éventuellement former un cycle ;

le nombre total d'atomes de carbone contenu dans R et R' étant d'au moins 5, de préférence de 9 à 20.

Lesdits alcools **E** sont, de préférence, choisis parmi ceux présentant un point d'ébullition supérieur à 250° C. On peut citer à titre d'exemples :

. l'éthynyl-1-cyclohexanol 1 ;
. le méthyl-3 dodécyne-1 ol-3 ;
. le triméthyl-3,7,11 dodécyne-1 ol-3 ;
. le diphényl-1,1 propyne-2 ol-1 ;
. l'éthyl-3 éthyl-6 nonyne-1 ol-3 ;
. le méthyl-3 pentadécyne-1 ol-3.

Ces alcools $\alpha$-acétyléniques sont des produits du commerce.

Un tel ralentisseur E est présent à raison de 3 000 ppm au maximum, de préférence à raison de 100 à 2000 ppm par rapport au poids total des organopolysiloxanes (**A**) et (**B**).

Par ailleurs, l'émulsion selon l'invention contient de manière facultative un ou plusieurs additifs **F**, qui peuvent être entre autres :

- $F_1$ = agent bactéricide comme par exemple l'acide sorbique,
- $F_2$ = agent antigel et/ou de mouillage comme par exemple les glycols tels que le propylène ou l'éthylène glycol,
- $F_3$ = antimousse avantageusement sélectionné parmi les antimousses silicones comme par exemple ceux commercialisés par la demanderesse sous la dénomination RHODORSEAL®
- $F_4$ = charge de préférence minérale choisie parmi les matières siliceuses ou non, les charges siliceuses étant plus particulièrement préférées,
- $F_5$ = coadditifs de type latex synthétiques associés aux colloïdes protecteurs **D** jouant le rôle d'émulsifiants et de promoteurs d'antiadhérence (APV) ; Ces latex synthétiques pouvant être par exemple, des (co)polymères butadiènes, des acryliques, des vinyl acétates, etc ;
- $F_6$ = colorant ou pigment ;
- $F_7$ = acidifiant tel que par exemple acide acétique.

Concernant les charges siliceuses $F_4$, il convient de noter qu'elles peuvent jouer le rôle de charge renforçante ou semi-renforçante.

Les charges siliceuses renforçantes sont choisies parmi les silices colloïdales, les poudres de silice de combustion et de précipitation ou leur mélange.

Ces poudres présentent une taille moyenne de particule généralement inférieure à 0,1 mm et une surface spécifique BET supérieure à 50 $m^2/g$, de préférence comprise entre 150 et 350 $m^2$ /g.

Les charges siliceuses semi-renforçantes telles que des terres de diatomées ou du quartz broyé, peuvent être également employées.

En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0,001 et 300 mm et une surface BET inférieure à 100 $m^2/g$.

Sur le plan pondéral, on préfère mettre en oeuvre une quantité de charge comprise entre 20 et 50, de préférence entre 25 et 35 % en poids par rapport à l'ensemble des constituants de la composition.

Suivant une disposition intéressante de l'invention, la proportion d'eau de l'émulsion est supérieure ou égale à 50 % en poids, de préférence supérieure ou égale à 55% en poids et par exemple en pratique de l'ordre de 55 - 60 % en poids ou bien encore de 85 à 90 % en poids.

Selon un autre de ses aspects, la présente invention concerne un procédé de préparation d'une émulsion silicone aqueuse, utilisable notamment comme base d'enduction pour la réalisation de revêtements anti-adhérents et hydrofuges,

cette émulsion étant du type de celle comprenant :

· au moins un polyorganosiloxane - **A** - (POS) porteur de motifs Si-IE avec IE représentant un groupement comportant au moins une insaturation éthylénique, de préférence vinylique et au moins un POS - **B** - porteur de motifs Si-H, ces derniers étant aptes à réagir par polyaddition avec les motifs Si-IE ;

· un catalyseur - **C** - métallique de préférence platinique,
· des radicaux hydroxyles susceptibles de réagir avec des motifs SiH par déshydrogénocondensation,

caractérisée en ce qu'il consiste essentiellement à préparer une dispersion de phase silicone dans l'eau en prenant soin :

→ de fixer le pH de l'émulsion finale entre 6 et 8,
→ et de faire en sorte que ce pH se maintienne de manière pérenne,
→ la fixation et le maintien du pH sont assurés par ajout dans l'émulsion, de préférence lorsque celle-ci contient du catalyseur - C -, d'au moins un agent - **T** - de fixation et de maintien du pH entre 5 et 9, de préférence entre 5,5 et 8,5 et plus préférentiellement encore entre 6 et 8, cet agent étant avantageusement un système tampon qui, de manière plus avantageuse encore, comporte le couple $HCO_3^-$ / $CO_3^{2-}$ et/ou $H_2PO_4^-$/$HPO_4^{2-}$.

Le procédé selon l'invention repose sur le fait que, contre toute attente, la mise en oeuvre d'un pH acide compris dans la fenêtre sus-visée et en présence d'un catalyseur **C** métallique de préférence de type platinique, permet une stabilisation de l'émulsion sur le plan physique et chimique, en particulier, en limitant de manière significative les réactions de déshydrogénocondensation. Il est essentiel que l'addition du système tampon dans l'émulsion, se fasse au plus tard lorsque celle-ci est additionnée de catalyseur - **C** - métallique e.g. du platine, voire juste après cette addition de catalyseur - **C** -.

On conçoit aisément que le choix du système tampon doit se faire en tenant compte du pH et de la composition de l'émulsion. Il convient notamment que le système tampon ajouté ne vienne pas contrarier les effets des autres constituants de l'émulsion.

Cette dernière comprend en effet outre l'eau, les constituants suivants :

- **A** - au moins un POS porteur, par molécule, d'au moins deux motifs Si-IE ;
- **B** - au moins un POS porteur, par molécule, d'au moins trois motifs Si-H ;
- **C** - un catalyseur métallique, de préférence platinique ;
- **T** - le ou les agents de fixation et de maintien du pH ;
- **D** - au moins un agent d'émulsification, de préférence choisi parmi les tensioactifs et/ou les colloïdes protecteurs, et plus préférentiellement encore parmi les alcools polyvinyliques (APV) ;
- **E** - éventuellement au moins un stabilisant de la réaction de polyaddition ;
- **F** - éventuellement un ou plusieurs additifs.

**A** et **B** étant incorporés en quantité telle que le ratio molaire Si-H / Si-IE soit compris entre 1 et 5, de préférence entre 1 et 3, et plus préférentiellement entre 1,5 et 2.

Il a déjà été indiqué supra que la limitation du foisonnement et de la gélification reflète finalement les améliorations apportées par l'invention, en termes de stabilité physique et chimique. On peut également prendre la mesure des effets positifs de l'invention en termes de réactivité des POS **A** et **B** réticulant par polyaddition, en appréciant la brillance de films réticulés obtenus à partir de l'émulsion. En effet au plus la réactivité est améliorée, au plus la brillance augmente.

Selon une disposition préférée de l'invention, on met en oeuvre, successivement ou non les étapes suivantes :

① - on prépare une préémulsion de base $E_1$ comprenant les composés **A** et éventuellement **T** et/ou **D** et/ou **E** et/ou **F** ;
② - on prépare une préémulsion catalysante $E_2$ comprenant **C** complété par **A** et éventuellement **T** et/ou **D** et/ou **E** et/ou **F**,
③ - on mélange $E_1$ à $E_2$ pour former l'émulsion $E_3$ ;
④ - on ajoute tout ou au moins une partie du reste de l'agent **T** dans $E_3$,
⑤ - on dilue éventuellement de préférence avec de l'eau,
⑥ - on complète éventuellement $E_3$ à l'aide de **T** et/ou **D** et/ou **E** et/ou **F**.

Selon. ce mode de mise en oeuvre, chaque préémulsion $E_1$ ou $E_2$ ne comprend pas les composés **A, B, C** ensemble, de sorte que la réticulation de **A** avec **B** ne risque pas de s'initier. Ces préémulsions $E_1$ et $E_2$ sont donc tout à fait stables au stockage.

Il en va de même en ce qui concerne l'émulsion $E_3$ pour autant que celle-ci contienne le stabilisant ou l'inhibiteur E de la réaction de polyaddition. Ce stabilisant E bloque la réticulation à température ambiante. Par contre, il ne fait plus sentir son effet dès lors que la température de l'émulsion dépasse un certain seuil. Ce seuil d'activation de la réticulation par polyaddition est par exemple de l'ordre de 50° C.

Selon une variante encore plus préférée du procédé selon l'invention, on cherche à produire une émulsion qui comprend une phase silicone dispersée sous forme de gouttelettes de trois types différents :

- celles essentiellement formées par du POS **A**,
- celles essentiellement formées par du POS **B**,
- celles comprenant du catalyseur **C** et au moins un POS, qui peut être notamment du POS **A** et/ou du POS **B**, de préférence du POS **A**.

Selon ce mode préféré de mise en oeuvre,

- l'étape ① consiste :

  ☐ 1.1. ☐ en une obtention d'une préémulsion $E_{11}$ à partir d'eau, de POS **A** et de préférence d'agent émulsifiant **D** et de stabilisant **E**,

  ☐ 1.2. D en une obtention d'une préémulsion $E_{12}$ à partir de POS **B** et de préférence, d'agent émulsifiant **D** et d'un additif acidifiant **F** et/ou d'autres additifs **F**, et éventuellement de stabilisant **E**,

  ☐ 1.3. ☐ en un mélange de $E_{11}$ avec $E_{12}$ pour obtenir $E_1$,

  ☐ 1.4. ☐ éventuellement en une adjonction d'autres additifs **F** ;

- l'étape ② consiste en l'obtention d'une émulsion $E_2$ à base de POS **A** ou **B**, de préférence **A**, de catalyseur **C**, d'agent émulsifiant **D** et d'additifs **F** (e.g. antigels, mouillants et bactéricides et éventuellement antimousses).

Ainsi, la formulation d'émulsion selon l'invention est un mélange de deux pré-émulsions, à savoir une préémulsion de base $E_1$ et une préémulsion catalysante $E_2$, de manière à produire une émulsion $E_3$, qui est diluée ou non avec de l'eau,de manière à ajuster l'extrait sec en silicone en fonction de l'application visée (dépôt silicone souhaitée, type de support traité et technique d'enduction).

Dès lors que l'on dispose d'une émulsion $E_3$ préparée ou non par le procédé décrit ci-dessus et qui présente l'avantage de n'être sujet ni au foisonnement, ni à la gélification, il est particulièrement intéressant de pouvoir l'utiliser dans des applications de fabrication de polymères silicones réticulés et notamment de revêtements silicones antiadhérents.

Il s'ensuit que selon un autre de ses objets, la présente invention concerne un procédé de réalisation d'un revêtement, en particulier antiadhérent et hydrofuge, sur un support fibreux ou non, de préférence en papier, caractérisé en ce qu'il consiste :

○ à enduire le support avec l'émulsion décrite ci-dessus, et/ou telle qu'obtenue par le procédé décrit supra,

○ et à faire en sorte que la couche enduite réticule en prévoyant, de préférence, une activation thermique.

L'enduction se réalise selon des moyens connus et appropriés, par exemple à la râcle ou au rouleau " size-press " ou " gate roll ".

Les moyens d'activation thermique de la réticulation sont classiquement des fours, (par exemple fours-tunnels), voire des sources d'infrarouge. Cette activation thermique peut être complétée par une activation actinique et/ou par bombardement d'électrons.

Les supports enduits sont de préférence des supports fibreux et plus préférntiellement encore des supports en papier ou analogues. Dans cette application, le taux d'enduction est inférieure ou égal à 1,2 g silicone / $m^2$ de support de préférence inférieur ou égal à 0,9 g /m2 et plus préférentiellement encore inférieur ou égal à 0,50 g /$m^2$.

Comme autres exemples de supports, on peut citer ceux constitués de polymères synthétiques tels que les polyéthylènes, les polypropylènes ou les polyesters ou bien encore de polymère naturel.

Il va de soi que les supports peuvent se présenter sous toute autre forme que celle de feuille ou de film.

Suivant une application privilégiée de l'émulsion selon l'invention, le support fibreux ou non comprend sur au moins une de ses faces un revêtement anti-adhérent et hydrofuge (éventuellement imprimable) obtenu par réticulation de ladite émulsion. Plus précisément, ce support peut comporter le revêtement anti-adhérent et hydrofuge sur l'une de ces faces et un revêtement adhésif sur la face opposée. Dans cette réalisation, on envisage notamment des articles tels que des étiquettes, des feuilles, des rubans ou similaires, auto-adhésifs qui ont pour propriété d'être hydrofuges et imprimables, collables les uns sur les autres de manière réversible. Cette dernière caractéristique est particulièrement intéressante pour les étiquettes auto-collantes car elle permet la suppression des supports anti-adhésifs classiques.

Il va de soi que l'invention n'est pas limitée aux supports à faces opposées adhésive/anti-adhérente, il englobe également tous les supports revêtus uniquement d'une couche d'adhésif imprimable qui peuvent être imprimés et

EP 1 044 237 B1

utilisés tels quels, par exemple, comme moyen de protection.

Les exemples qui suivent de préparation de l'émulsion silicone considérée et de son application comme revêtement anti-adhérent et hydrofuge pour supports papiers, permettront de mieux comprendre et appréhender l'invention. Ils feront également ressortir les variantes et les avantages de ladite invention, dont les performances en termes de stabilité seront mises en exergue par des tests comparatifs.

**EXEMPLES :**

EXEMPLE 1 : PREPARATION

**A** - On réalise une émulsion $E_{1.1}$ avec environ 2 % Pds d'alcool polyvinylique de taux d'hydrolyse 88 % molaire et de masse moléculaire environ 90 000. L'huile silicone **A** mise en émulsion représente environ 38 % Pds de l'émulsion. Le POS **A** est un polysiloxane contenant des groupements vinyls dans et en bout de chaîne. La teneur en groupement vinyls est d'environ 1% Pds (masse 27). Cette huile vinylée **A** contient également le stabilisant **E** de la réaction chimique de polyaddition, à savoir l'éthynylcyclohexanol, environ 0,15 % Pds par rapport à l'huile silicone vinylée **A**.

L'agent réticulant est ajouté sous la forme d'émulsion $E_{12}$ réalisée avec un mélange de tensioactifs non ioniques **D**, formés par des nonylphénols contenant 9 et 30 groupements oxydes d'éthylène, environ 2,55 % Pds. L'huile silicone **B** servant de réticulant représente environ 60 % Pds de l'émulsion. **B** réagit avec les groupements vinyls cités ci-dessus. C'est une huile hydrogénopolysiloxane **B** dont la teneur en groupements réactifs 'SiH' (masse 29) est d'environ 1,05 groupements pour 100 g d'huile hydrogénopolysiloxane. L'émulsion $E_{12}$ contenant le réticulant est acidifié avec de l'acide acétique $F_7$ environ 0,12 % Pds, car c'est en milieu aqueux acide de pH compris entre 4,5 et 5,5 que les groupements 'SiH' sont les plus stables. Le complément à 100 % Pds de l'émulsion réticulante est assurée par de l'eau ultrafiltrée et osmosée.

Pour obtenir l'émulsion de base $E_1$, on mélange $E_{11}$ et $E_{12}$.

Cette émulsion de base $E_{12}$ contient également un agent bactéricide $F_1$, l'acide sorbique environ 0,05 % Pds et un agent $F_2$ **antigel et de mouillage (le propylène** glycol) environ 3,5 % Pds. L'émulsion réticulante $E_{1.2}$ citée ci-dessus est ajoutée en quantité telle que le ratio " SiH/SiVi" est égal à environ 1,7. Le complément à 100 % Pds de l'émulsion de base $E_1$ est assuré par de l'eau ultra filtrée et osmosée.

**B** - Le catalyseur de la réaction de polyaddition est ajouté à l'émulsion de base $E_1$ sous la forme d'une émulsion $E_2$, obtenue par mise en émulsion d'un mélange catalysant, à l'aide d'un agent d'émulsification **D** formé par environ 2,0 % Pds d'alcool polyvinylique de taux d'hydrolyse 88 % molaire et de masse moléculaire environ 90 000.

Le mélange catalysant est obtenu par dilution du catalyseur **C** de karsted (tel que décrit dans la littérature) dans une huile silicone vinylée, tel que le taux global de platine dans l'émulsion catalysante soit d'environ 300 ppm exprimé en platine métal et que le taux en silicone de l'émulsion $E_2$ soit voisin de 38 % Pds. L'huile silicone de dilution est une huile organopolydiméthylsiloxane contenant environ 0,38 % Pds de vinyls bout de chaîne (masse 27).

Cette émulsion $E_2$ contient également un mélange, environ 0,1 % Pds, de tensioactifs **F** non ionique en l'occurrence nonylphénol contenant 9 et 30 groupements oxydes d'éthylène et environ 3,5 Pds de propylène glycol agent $F_2$ antigel et de mouillage ainsi qu'environ 0,05 % Pds d'acide sorbique l'agent bactéricide $F_1$.

L'émulsion de base $E_1$ et l'émulsion catalysante $E_2$, ainsi décrites sont mélangées en proportion 100 parties d'émulsion $E_1$ de base pour 12 parties d'émulsion catalysante $E_2$, pour obtenir l'émulsion $E_3$. Conformément à l'invention, on incorpore dans l'émulsion $E_3$ un système tampon **T** formé par du Na $HCO_3$.

Ce mélange est ensuite dilué avec de l'eau environ 196 parties de manière à avoir un extrait sec en silicone dans le bain d'environ 15 % Pds.

A ce mélange, on peut ajouter un antimousse silicone $F_3$ ou non pour éliminer les mousses mécaniques.

Ce bain ainsi préparé à la propriété une fois enduit sur un support et après chauffage pour élimination de l'eau et polymérisation du silicone de donner un film de silicone solide à la surface du support.

EXEMPLE 2 : EVALUATION DE LA STABILITE DES EMULSIONS SELON L'INVENTION

*2.1.* On prépare des échantillons de 300 ml de bain $E_3$ comprenant :

100 g d'émulsion de base $E_1$ décrite ci-dessus,

12 g d'émulsion catalysante $E_2$ décrite ci-dessus,
196 g d'eau de dilution ultra filtrée et osmosée, de manière à avoir une eau ultra pure,
0 ou 0,12 g de bicarbonate de soude.

Ces 300 ml d'émulsion $E_3$ sont introduits dans un bécher en inox de 500 ml et disposés sur un support de manière à ce que le bécher trempe dans l'eau du bain thermostaté.

L'agitation du bain est assuré par un moteur pouvant tourner de 100 à 2000 tr/mn, le mobile est une hélice de bateau de 45 mm de diamètre.

Le bain est donc mis en agitation durant 4 heures à 1000tr/min d'agitation et 40° C.

De la mise sous agitation à 4 heures un échantillon est prélevé toutes les heures de manière à tester la réactivité en étuve. Une partie de l'échantillon est enduit sur un support donné (sulpack BNL de Ahlstrom paper group) avec une barre de Meyer N° 0,15, dépôt silicone environ 1,0 g/m$^2$. Cette enduction est ensuite déposée dans une étuve ventilée à une température donnée ici 110° C. Il faut rechercher le temps minimum pour avoir une polymérisation correcte du silicone évalué au test de scotch. On dit qu'une polymérisation de silicone est correcte au test de scotch, lorsqu'un scotch appliqué sur l'enduction, décollé de l'enduction et recollé sur lui-même (les deux faces adhésif) adhère sur lui-même.

Au bout des 4 heures de maintien dans les conditions décrites ci-dessus l'agitation est arrêtée et la totalité du bain restant dans le bêcher est filtré sur un filtre en Nylon de 400 $\mu$m, les gels et mousses solides récupérés dans le filtre sont lavés à grandes eaux et séchés en étuve 30 min à 150° C. Le poids de gel obtenu donne quantitativement la stabilité chimique du bain, c'est-à-dire l'aptitude du bain à former des gels et/ou des mousses solides.

Le suivi de la vitesse de polymérisation décrite ci-dessus permet d'évaluer la permanence de la réactivité dans le temps et donc indirectement la stabilité chimique du bain, car toute espèce réactive ou catalytique disparaissant, conduit à une diminution de la réactivité chimique.

*2.2. RESULTATS*

| | Formulation 1 | Formulation 2 | Formulation 3 | Formulation 4 | Formulation 5 |
|---|---|---|---|---|---|
| | en parties | en parties | en parties | en parties | en parties |
| Emulsion $E_1$ | 100.00 | 100.00 | 100.00 | 100.00 | 100.00 |
| Emulsion $E_2$ | 12.00 | 12.00 | 10.00 | 8,00 | 6,00 |
| Eau de dilution | 196.00 | 196.00 | 196.00 | 196.00 | 196.00 |
| Bicarbonate de soude | 0,00 | 0,12 | 0,12 | 0,12 | 0,12 |

| | Temps de polymérisation en secondes | | | | |
|---|---|---|---|---|---|
| | t = 0 | t = 1 heure à 40° C | t = 2 heures 40° C | t = 3 heures à 40° C | t = 4 heures 40° C |
| Formulation 1 | 15 | 25 | > 90 | > 90 | > 90 |
| Formulation 2 | 15 | 15 | 15 | 15 | 15 |
| Formulation 3 | 15 | 15 | 17 | 15 | 15 |
| Formulation 4 | 17 | 22 | 22 | 22 | 17 |
| Formulation 5 | 45 | 45 | 45 | 45 | 60 |

| | % de gel formés au bout de 4 heures à 40° C sous agitation |
|---|---|
| Formulation 1 | 2 |
| Formulations 2 à 5 | 0 |

| | Moussage chimique, mousses dures, consistantes |
|---|---|
| Formulation 1 | important |
| Formulations 2 à 5 | nul |

*% de gel formés au bout de 4 heures sous agitation = quantité de gel formés / quantité de silicone introduit.*

Pour une formulation silicone donnée, la vitesse de polymérisation est fonction de la température des fours et du temps de séjour du support dans ces fours.

**Revendications**

1. Emulsion silicone aqueuse, utilisable notamment comme base d'enduction pour la réalisation de revêtements antiadhérents et hydrofuges, cette émulsion étant du type de celle comprenant :

   · au moins un polyorganosiloxane - **A** - (POS) porteur de motifs Si-IE avec IE représentant un groupement comportant au moins une insaturation éthylénique, et au moins un POS - **B** - porteur de motifs SiH ; ces derniers étant aptes à réagir par polyaddition avec les motifs SilE,
   · un catalyseur - **C** - métallique à base de platine,
   · des radicaux hydroxyles susceptibles de réagir avec des motifs SiH par déshydrogénocondensation,

   **caractérisée en ce qu'**elle comprend en outre au moins un agent - **T** - de fixation et de maintien du pH entre 6 et 8, cet agent étant un système tampon.

2. Emulsion silicone selon la revendication 1 **caractérisée en ce que** sa phase silicone dispersée non aqueuse, a la composition qualitative suivante :

   - **A** - au moins un POS porteur, par molécule, d'au moins deux motifs Si-IE ;
   - **B** - au moins un POS porteur, par molécule, d'au moins trois motifs Si-H ;
   - **C** - un catalyseur métallique, à base de platine ;
   - **T** - l' ou les agents de fixation et de maintien du pH ;
   - **D** - au moins un agent d'émulsification choisi parmi les tensioactifs et/ou les colloïdes protecteurs,
   - **E** - éventuellement au moins un stabilisant de la réaction de polyaddition ;
   - **F** - éventuellement un ou plusieurs additifs.

3. Emulsion selon la revendication 1 ou 2, **caractérisée en ce que** sa phase silicone dispersée non-aqueuse à la composition quantitative suivante (en poids sec par rapport à la masse totale des POS A et B)

   - **C** - 30 à 200 ppm ;
   - **D** - 0,01 à 10 parties pour 100 parties ;
   - **E** - 0 à 5000 ppm ;
   - **F** - 0 à 10 ppm ;

   → **A** et **B** étant présents en quantités telles que le ratio molaire SiH / SiVi soit compris entre 1 et 5,
   → **T** étant présent en quantité suffisante pour maintenir le pH dans la fenêtre visée.

4. Emulsion selon l'une quelconque des revendications 1 à 3, **caractérisée en ce qu'**elle comprend au moins trois familles différentes de gouttelettes de phase silicone dispersée :

   *    $g_1$ * essentiellement constituée de POS **A** et exempte de catalyseur **C**
   *    $g_2$ * essentiellement constituée de POS **B** et exempte de catalyseur **C**
   *    $g_3$ * comprenant le catalyseur **C** ;

   les gouttelettes d'au moins l'une de ces familles comportant au moins un stabilisant E.

5. Procédé de préparation d'une émulsion silicone aqueuse, utilisable notamment comme base d'enduction pour la réalisation de revêtements anti-adhérents et hydrofuges,
   cette émulsion étant du type de celle comprenant :

   · au moins un polyorganosiloxane - **A** - (POS) porteur de motifs Si-IE avec IE représentant un groupement comportant au moins une insaturation éthylénique et au moins un POS - **B** - porteur de motifs Si-H, ces derniers étant aptes à réagir par polyaddition avec les motifs Si-IE ;
   · un catalyseur - **C** - métallique à base de platine,
   · des radicaux hydroxyles susceptibles de réagir avec des motifs SiH par déshydrogénocondensation,

   **caractérisée en ce qu'**il consiste essentiellement à préparer une dispersion de phase silicone dans l'eau en prenant soin :

→ de fixer le pH de l'émulsion finale entre 6 et 8,

→ et de faire en sorte que ce pH se maintienne de manière pérenne,

→ la fixation et le maintien du pH étant assurés par ajout dans l'émulsion d'au moins un agent **- T -** de fixation et de maintien du pH entre 6 et 8, cet agent étant un système tampon.

6. Procédé selon la revendication 5, catactérisé en ce que l'on met en oeuvre, outre l'eau, au moins les constituants suivants :

- **A** - au moins un POS porteur, par molécule, d'au moins deux motifs Si-IE ;
- **B** - au moins un POS porteur, par molécule, d'au moins trois motifs Si-H ;
- **C** - un catalyseur métallique à base de platine ;

- **T** -le ou les agents de fixation et de maintien du pH ;

- **D** - au moins un agent d'émulsification choisi parmi les tensioactifs et/ou les colloïdes protecteurs ;
- **E** - éventuellement au moins un stabilisant de la réaction de polyaddition ;
- **F** - éventuellement un ou plusieurs additifs ;
 **A** et **B** étant incorporés en quantité telle que le ratio molaire Si-H / Si-IE soit compris entre 1 et 5.

7. Procédé selon la revendication 5 ou 6, **caractérisé en ce que**, successivement ou non :

① - on prépare une préémulsion de base $E_1$ comprenant les composés **A** et **B** et éventuellement **T** et/ou **D** et/ou **E** et/ou **F** ;

② - on prépare une préémulsion catalysante $E_2$ comprenant **C** complété par **A** et éventuellement **T** et/ou **D** et/ou **E** et/ou **F** ;

③ - on mélange $E_1$ à $E_2$ pour former l'émulsion $E_3$ ;

④ - on ajoute tout ou au moins une partie du reste de l'agent **T** dans $E_3$,

⑤ - on dilue éventuellement avec de l'eau,

⑥ - on complète éventuellement $E_3$ à l'aide de **T** et/ou **D** et/ou **E** et/ou **F**.

8. Procédé selon la revendication 7, **caractérisé en ce que** :

- l'étape ① consiste :

☐ 1.1. ☐ en une obtention d'une préémulsion $E_{11}$ à partir d'eau, de POS **A** et d'agent émulsifiant **D** et de stabilisant **E** ;

☐ 1.2. ☐ en une obtention d'une préémulsion $E_{12}$ à partir de POS **B** et d'agent émulsifiant **D** et éventuellement d'un additif acidifiant **F** et/ou d'autres additifs **F**, et de stabilisant **E**,

☐ 1.3. ☐ en un mélange de $E_{11}$ avec $E_{12}$ pour obtenir $E_1$,

☐ 1.4. ☐ éventuellement en une adjonction d'autres additifs **F** ;

- l'étape ② consiste en l'obtention d'une émulsion $E_2$ à base de POS **A**, de catalyseur **C**, d'agent émulsifiant **D** et d'additifs **F**.

9. Procédé de réalisation d'un revêtement, en particulier antiadhérent et hydrofuge, sur un support fibreux ou non, **caractérisé en ce qu'**il consiste :

○ à enduire le support avec l'émulsion selon l'une quelconque des revendications 1 à 4, et/ou telle qu'obtenue par le procédé selon l'une quelconque des revendications 5 à 8,

○ et à faire en sorte que la couche enduite réticule.

**Claims**

1. Aqueous silicone emulsion which can be used in particular as coating base for the preparation of anti-adhesive and water-repellent coatings, this emulsion being of the type of that comprising:

• at least one polyorganosiloxane (**A**) (POS) carrying Si-EU units with EU representing a group comprising at least one ethylenic unsaturation, and at least one POS (**B**) carrying SiH units; the latter being capable of reacting by polyaddition with the SiEU units,

- a platinum-based metal catalyst (**C**),
- hydroxyl radicals capable of reacting with SiH units by dehydrogenation/condensation,

**characterized in that** it additionally comprises at least one agent (**T**) for fixing and maintaining the pH between 6 and 8, this agent being a buffer system.

2. Silicone emulsion according to claim 1,
**characterized in that** its non-aqueous dispersed silicone phase has the following qualitative composition:

(**A**) at least one POS carrying, per molecule, at least two Si-EU units;
(**B**) at least one POS carrying, per molecule, at least three Si-H units;
(**C**) a platinum-based metal catalyst;
(**T**) the agent or agents for fixing and maintaining the pH;
(**D**) at least one emulsifying agent chosen from surfactants and/or protective colloids;
(**E**) optionally at least one stabilizer for the polyaddition reaction;
(**F**) optionally one or more additives.

3. Emulsion according to claim 1 or 2, **characterized in that** its non-aqueous dispersed silicone phase has the following quantitative composition (as dry weight with respect to the total mass of the POS A and POS B):

(**C**) 30 to 200ppm;
(**D**) 0.01 to 10 parts per 100 parts;
(**E**) 0 to 5000 ppm;
(**F**) 0 to 10 ppm;

→ **A** and **B** being present in amounts such that the SiH/SiVi molar ratio is between 1 and 5;
→ **T** being present in an amount sufficient to maintain the pH in the targeted window.

4. Emulsion according to any one of claims 1 to 3, **characterized in that** it comprises at least three different families of droplets of dispersed silicone phase:

* $d_1$* essentially composed of POS **A** and devoid of catalyst **C**;
* $d_2$* essentially composed of POS **B** and devoid of catalyst **C**;
* $d_3$* comprising the catalyst **C**;

the droplets of at least one of these families comprising at least one stabilizer **E**.

5. Process for the preparation of an aqueous silicone emulsion which can be used in particular as coating base for the preparation of anti-adhesive and water-repellent coatings,
this emulsion being of the type of that comprising:

- at least one polyorganosiloxane (**A**) (POS) carrying Si-EU units with EU representing a group comprising at least one ethylenic unsaturation, and at least one POS (**B**) carrying Si-H units, the latter being capable of reacting by polyaddition with the Si-EU units;
- a platinum-based metal catalyst (**C**);
- hydroxyl radicals capable of reacting with SiH units by dehydrogenation/condensation;

**characterized in that** it consists essentially in preparing a dispersion of silicone phase in water while taking care:

→ to fix the pH of the final emulsion between 6 and 8,
→ and to see to it that this pH is permanently maintained,
→ the fixing and the maintenance of the pH being provided by addition to the emulsion of at least one agent (**T**) for fixing and maintaining the pH between 6 and 8, this agent being a buffer system.

6. Process according to claim 5 **characterized in that** use is made, in addition to water, of at least the following ingredients:

(**A**) at least one POS carrying, per molecule, at least two Si-EU units;
(**B**) at least one POS carrying, per molecule, at least three Si-H units;
(**C**) a platinum-based metal catalyst;
(**T**) the agent or agents for fixing and maintaining the pH;
(**D**) at least one emulsifying agent chosen from surfactants and/or protective colloids;
(**E**) optionally at least one stabilizer for the polyaddition reaction;
(**F**) optionally one or more additives;

**A** and **B** being incorporated in amounts such that the Si-H/Si-EU molar ratio is between 1 and 5.

**7.** Process according to claim 5 or 6 **characterized in that**, successively or non-successively:

① - a base preemulsion $E_1$ is prepared which comprises the compounds **A** and **B** and optionally **T** and/or **D** and/or **E** and/or **F**;
② - a catalysing preemulsion $E_2$ is prepared which comprises **C** complemented by **A** and optionally **T** and/or **D** and/or **E** and/or **F**;
③ - $E_1$ and $E_2$ are mixed in order to form the emulsion $E_3$;
④ - all or at least a portion of the remainder of the agent **T** is added to $E_3$;
⑤ - diluting is optionally carried out with water;
⑥ - $E_3$ is optionally complemented using **T** and/or **D** and/or **E** and/or **F**.

**8.** Process according to claim 7, **characterized in that**:

- stage ① consists:

  □ 1.1. □ in producing a preemulsion $E_{11}$ from water, from POS **A** and from emulsifying agent **D** and from stabilizer **E**,
  □ 1.2. □ in producing a preemulsion $E_{12}$ from POS **B** and from emulsifying agent **D** and optionally from an acidifying additive **F** and/or from other additives F and from stabilizer **E**,
  □ 1.3. □ in mixing $E_{11}$ with $E_{12}$ in order to produce $E_1$,
  □ 1.4. □ in optionally adding other additives **F**;

- stage ② consists in producing an emulsion $E_2$ based on POS **A**, on catalyst C, on emulsifying agent **D** and on additives **F**.

**9.** Process for preparing a coating, in particular an anti-adhesive and water-repellent coating, on a fibrous or non-fibrous substrate, **characterized in that** it consists:

  ○ in coating the substrate with the emulsion according to any one of claims 1 to 4 and/or as obtained by the process according to any one of claims 5 to 8,
  ○ and in seeing to it that the coated layer crosslinks.

**Patentansprüche**

**1.** Wäßrige Siliconemulsion, insbesondere verwendbar als Beschichtungsgrundlage für die Ausführung von antiadhäsiven und wasserabweisenden Überzügen, wobei diese Emulsion von der Art ist, die umfaßt:

· mindestens ein Polyorganosiloxan - **A** - (POS) als Träger von Struktureinheiten Si-IE, wobei IE eine Gruppe ist, die mindestens eine ethylenische Unsättigung umfaßt, und mindestens ein POS **- B -** als Träger von Struktureinheiten SiH; wobei diese letzteren fähig sind, mit den Struktureinheiten Si-IE durch Polyaddition zu reagieren,
· einen metallischen Katalysator **- C -** auf der Basis von Platin,
· Reste Hydroxyl, die fähig sind, mit den Struktureinheiten SiH durch Dehydrogenokondensation zu reagieren,

**dadurch gekennzeichnet, daß** sie außerdem mindestens ein Mittel **- T -** zur Fixierung und zum Halten des pH-Wertes zwischen 6 und 8 umfaßt, wobei dieses Mittel ein Puffersystem ist.

2. Siliconemulsion nach Anspruch 1, **dadurch gekennzeichnet, daß** ihre nichtwäßrige dispergierte Siliconphase die folgende qualitative Zusammensetzung besitzt:

    - **A** - mindestens ein POS, das pro Molekül mindestens zwei Struktureinheiten Si-IE trägt;
    - **B** - mindestens ein POS, das pro Molekül mindestens drei Struktureinheiten Si-H trägt;
    - **C** - einen metallischen Katalysator auf der Basis von Platin;
    - **T** - das oder die Mittel zur Fixierung und zum Halten des pH-Wertes;
    - **D** - mindestens ein Emulgierungsmittel, ausgewählt unter den oberflächenaktiven Mitteln und/oder den Schutzkolloiden;
    - E - gegebenenfalls mindestens einen Stabilisator der Reaktion der Polyaddition;
    - **F** - gegebenenfalls einen oder mehrere Zusatzstoffe.

3. Emulsion nach Anspruch 1 oder 2, **dadurch gekennzeichnet, daß** ihre nichtwäßrige dispergierte Siliconphase die folgende quantitative Zusammensetzung besitzt (in Trockengewicht, bezogen auf die Gesamtmasse der POS A und B) :

    - **C** - 30 bis 200 ppm;
    - D - 0,01 bis 10 Teile pro 100 Teile;
    - **E** - 0 bis 5000 ppm;
    - **F** - 0 bis 10 ppm;

wobei **A** und **B** in solchen Mengen vorliegen, daß das molare Verhältnis SiH / SiVi zwischen 1 und 5 beträgt, wobei **T** in einer solchen Menge vorliegt, die ausreichend ist, um den pH-Wert in dem beabsichtigten Fenster zu halten.

4. Emulsion nach irgendeinem der Ansprüche 1 bis 3, **dadurch gekennzeichnet, daß** sie mindestens drei unterschiedliche Familien von Tröpfchen der dispergierten Siliconphase umfaßt:

    *    $g_1$ * im wesentlichen bestehend aus POS **A** und frei von Katalysator **C**
    *    $g_2$ * im wesentlichen bestehend aus POS **B** und frei von Katalysator **C**
    *    $g_3$ * umfassend den Katalysator **C**;

wobei die Tröpfchen von mindestens einer dieser Familien mindestens einen Stabilisator **E** umfassen.

5. Verfahren zur Herstellung einer wäßrigen Siliconemulsion, insbesondere verwendbar als Beschichtungsgrundlage für die Ausführung von antiadhäsiven und wasserabweisenden Überzügen, wobei diese Emulsion von der Art ist, die umfaßt:

    · mindestens ein Polyorganosiloxan - **A** - (POS) als Träger von Struktureinheiten Si-IE mit IE einer Gruppe, die mindestens eine ethylenische Unsättigung umfaßt, und mindestens ein POS **- B -** als Träger von Struktureinheiten SiH; wobei diese letzteren fähig sind, mit den Struktureinheiten Si-IE durch Polyaddition zu reagieren,
    . einen metallischen Katalysator - **C** - auf der Basis von Platin,
    · Reste Hydroxyl, die fähig sind, mit den Struktureinheiten SiH durch Dehydrogenokondensation zu reagieren,

**dadurch gekennzeichnet, daß** es im wesentlichen darin besteht, eine Dispersion der Siliconphase in Wasser herzustellen, indem man durchführt:

    →   Fixierung des pH-Wertes der Fertigemulsion zwischen 6 und 8,
    →   und in der Weise vorzugehen, daß sich dieser pH-Wert fortdauernd aufrecht erhält,
    →   die Fixierung und das Halten des pH-Wertes werden durch Zugabe zu der Emulsion von mindestens einem Mittel **- T -** zur Fixierung und zum Halten des pH-Wertes zwischen 6 und 8 gewährleistet, wobei dieses Mittel ein Puffersystem ist.

6. Verfahren nach Anspruch 5, **dadurch gekennzeichnet, daß** man außer Wasser mindestens die folgenden Bestandteile einsetzt:

- **A** - mindestens ein POS, das pro Molekül mindestens zwei Struktureinheiten Si-IE trägt;
- **B** - mindestens ein POS, das pro Molekül mindestens drei Struktureinheiten Si-H trägt;
- **C** - einen metallischen Katalysator auf der Basis von Platin;
- **T** - das oder die Mittel zur Fixierung und zum Halten des pH-Wertes;
- **D** - mindestens ein Emulgierungsmittel, ausgewählt unter den oberflächenaktiven Mitteln und/oder den Schutzkolloiden;
- **E** - gegebenenfalls mindestens einen Stabilisator der Reaktion der Polyaddition;
- **F** - gegebenenfalls einen oder mehrere Zusatzstoffe;

wobei **A** und **B** in einer solchen Menge eingetragen werden, daß das molare Verhältnis Si-H / Si-IE zwischen 1 und 5 beträgt.

7. Verfahren nach Anspruch 5 oder 6, **dadurch gekennzeichnet, daß** man nacheinander oder auch nicht

    ① - eine Pre-Emulsion der Basis $E_1$ herstellt, umfassend die Verbindungen **A** und **B** und gegebenenfalls **T** und/oder **D** und/oder **E** und/oder **F**;
    ② - eine katalysierende Pre-Emulsion $E_2$ herstellt, umfassend **C**, vervollständigt durch **A** und gegebenenfalls **T** und/oder **D** und/oder **E** und/oder **F**;
    ③ - $E_1$ mit $E_2$ vermischt, um die Emulsion $E_3$ zu bilden;
    ④ - alles oder mindestens einen Teil des Restes von dem Mittel **T** zu $E_3$ gibt;
    ⑤ - gegebenenfalls mit Wasser verdünnt;
    ⑥ - gegebenenfalls $E_3$ mit Hilfe von **T** und/oder **D** und/oder **E** und/oder **F** vervollständigt.

8. Verfahren nach Anspruch 7, **dadurch gekennzeichnet, daß**

    - die Stufe ① besteht in :

        ☐ 1.1 ☐ einem Herstellen einer Pre-Emulsion $E_{11}$ ausgehend von Wasser, POS **A**, Emulgierungsmittel **D** und Stabilisator **E**;
        ☐ 1.2 ☐ einem Herstellen einer Pre-Emulsion $E_{12}$ ausgehend von POS **B** und Emulgierungsmittel **D** und gegebenenfalls einem ansäuernden Zusatzstoff **F** und/oder anderen Zusatzstoffen **F** und Stabilisator **E**;
        ☐ 1.3 ☐ einem Vermischen von $E_{11}$ mit $E_{12}$, um $E_1$ zu erhalten;
        ☐ 1.4 ☐ gegebenenfalls in einer Zugabe von weiteren Zusatzstoffen **F**;

    - die Stufe ② besteht: in der Herstellung einer Emulsion $E_2$ auf der Basis von POS **A**, Katalysator **C**, Emulgierungsmittel **D** und Zusatzstoffen **F**.

9. Verfahren zur Ausführung eines insbesondere antiadhäsiven und wasserabweisenden Überzuges auf einem faserförmigen Träger oder nicht, **dadurch gekennzeichnet, daß** es besteht in:

    ○ dem Beschichten des Trägers mit einer Emulsion nach irgendeinem der Ansprüche 1 bis 4 und/oder wie sie durch das Verfahren nach irgendeinem der Ansprüche 5 bis 8 erhalten wird,
    ○ und daß man in der Weise vorgeht, daß die aufgetragene Schicht vernetzt.